# EUROPÄISCHE PATENTSCHRIFT

(11) **EP 3 546 399 B1**
(45) Veröffentlichungstag und Bekanntmachung des Hinweises auf die Patenterteilung: **12.01.2022**
(21) Anmeldenummer: 19160926.2
(22) Anmeldetag: 06.03.2019
(51) Int. Cl.: B65G 47/53

(54) **HUB- UND FÖRDERVORRICHTUNG UND STRECKENFÖRDERER MIT DER HUB- UND FÖRDERVORRICHTUNG**
LIFTING AND TRANSPORT DEVICE AND CONVEYOR USING THE LIFTING AND TRANSPORT DEVICE
DISPOSITIF DE LEVAGE ET DE TRANSPORT ET TRANSPORTEUR À VIS DOTÉ DU DISPOSITIF DE LEVAGE ET DE TRANSPORT

(30) Priorität: 27.03.2018 DE 102018204644
(43) Veröffentlichungstag der Anmeldung: 02.10.2019
(73) Patentinhaber: Robert Bosch GmbH, 70442 Stuttgart (DE)
(72) Erfinder: Buttau, Hans-Peter, 74348 Lauffen (DE); Kiebel, Markus, 70499 Stuttgart (DE); Ludwig, Peter, 72072 Tuebingen (DE)

(56) Entgegenhaltungen:
- EP-A2- 0 077 753
- WO-A1-2010/086980
- AT-B- 317 808
- DE-A1- 3 917 484
- DE-C- 953 598
- FR-A1- 2 327 940
- GB-A- 1 457 541
- JP-A- H07 315 562
- JP-Y1- S 509 758
- US-A1- 2014 262 684
- US-A1- 2016 362 260

## Beschreibung

Die Erfindung betrifft eine Hub- und Fördervorrichtung gemäß dem Oberbegriff des Patentanspruchs 1, sowie einen Streckenförderer mit dieser Vorrichtung gemäß Patentanspruch 13.

Ein Streckenförderer hat eine oder mehrere Förderlinien. Pro Förderlinie läuft entlang einer linearen oder kurvigen Förderbahn ein Fördermittel endlos um. Auf dem Fördermittel ist das zu fördernde Gut meist mittels eines Werkstückträgers abgestützt. Das Fördermittel weist häufig zwei parallele, beidseitig einer Mittelachse der Förderbahn angeordnete Stränge, beispielsweise Förderbänder, auf. So verfährt die Förderlinie den Werkstückträger und das Werkstück entlang der Förderbahn, bis zu einem Punkt, an dem der Werkstückträger mit dem Werkstück beispielsweise an eine andere, insbesondere kreuzende oder abgewinkelte, Förderlinie oder an eine Bearbeitungsstation übergeben werden muss. Hierzu bedarf es einer Vorrichtung, die den Werkstückträger von der ersten Förderlinie abhebt und auf die zweite Förderlinie oder die Bearbeitungsstation versetzt. Eine derartige Vorrichtung muss folglich eine Hub- und eine Förderbewegung ausführen können und wird daher als Hub- und Fördervorrichtung bezeichnet. Da die Förderbewegung häufig quer zur ersten Förderlinie erfolgt, ist der Begriff Hubquereinheit gebräuchlich.

Aus der DE 39 17 484 A1 ist eine Vorrichtung nach dem Oberbegriff des Anspruchs 1 bekannt, die aus zwei sich im rechten Winkel kreuzenden Fördermitteln besteht. Eines der beiden Fördermittel ist heb- und senkbar um ein Umsetzen einer Ladeeinheit von einer Rollenbahn auf einen Kettenförderer umzusetzen.

Die Druckschrift EP 1 318 088 B1 zeigt eine Hub- und Fördervorrichtung mit einem ortsfest befestigten Grundkörper und einem daran angeordneten pneumatischen Hubzylinder. Dessen linearbeweglicher Kolben ist mit einem Hubkörper der Vorrichtung gekoppelt, an dem ein umlaufendes Fördermittel umgelenkt ist. Im Normalbetrieb ist die vom Fördermittel gebildete Förderbahn der Vorrichtung unter die Förderbahn der Förderlinie abgesenkt und somit außer Eingriff mit passierenden Werkstückträgern. Soll ein Werkstückträger umgesetzt werden, so führt der Kolben und damit der Hubkörper einen Hub nach oben aus und hebt den Werkstückträger von der ersten Förderlinie ab. In dem Moment liegt der Werkstückträger nicht mehr auf dem Fördermittel der ersten Förderlinie, sondern auf demjenigen der Hub- und Fördervorrichtung auf. Wird dessen Fördermittel nun in Bewegung versetzt, so wird der Werkstückträger in Richtung der Förderbahn der Vorrichtung, also quer zur ersten Förderlinie, versetzt und auf die zweite Förderlinie gefördert.

Nachteilig an der gezeigten Lösung können eine relativ aufwendige Versorgung des Pneumatikzylinders mit pneumatischem Druckmittel, ein vom Pneumatikzylinder beanspruchter, großer Bauraum und eine vergleichsweise geringe Tragkraft des Pneumatikzylinders sein.

Demgegenüber liegt der Erfindung die Aufgabe zu Grunde, eine Hub- und Fördervorrichtung mit vereinfachten Aufbau, sowie einen Streckenförderer mit einer derartigen Vorrichtung zu schaffen.

Die erste Aufgabe wird gelöst durch eine Hub- und Fördervorrichtung mit den Merkmalen des Patentanspruchs 1, die zweite durch einen Streckenförderer mit den Merkmalen des Patentanspruchs 13.

Vorteilhafte Weiterbildungen der Hub- und Fördervorrichtung sind in den abhängigen

Patentansprüchen beschrieben.

Eine Hub- und Fördervorrichtung hat einen hubfähigen Träger, auch Hubkörper genannt, an dem ein umlaufendes Fördermittel zu einer Förderbahn der Vorrichtung umgelenkt ist. Auf diesem Fördermittel ist ein Gut mittelbar oder unmittelbar absetzbar und somit entlang der Förderbahn förderbar. Das Fördermittel kann beispielsweise zwei parallel beabstandete Stränge aufweisen, wobei das Gut oder ein Gut-Träger auf den Strängen absetzbar ist. Der Hubkörper ist von einem Linearantrieb der Vorrichtung angelenkt oder bedarfsabhängig anlenkbar, so dass ein Hub des Hubkörpers ausführbar ist. Der Hub erfolgt dabei insbesondere normal zur Förderbahn, insbesondere normal zu einer Förderebene, in der die Förderbahn ausgebildet ist. Erfindungsgemäß hat der Linearantrieb einen Drehmotor und ein Motorgetriebe, insbesondere ein Kurvengetriebe, über das ein Drehwinkel des Drehmotors in den Hub wandelbar ist.

Verglichen mit der Lösung des Standes der Technik, die auf einem Pneumatikzylinder basiert, erweist sich die Lösung mit Drehmotor und Motorgetriebe für eine geforderte Tragkraft als vorrichtungstechnisch kompakter.

Besonders einfach erweist sich eine Energieversorgung des Drehmotors, wenn dieser in einer Weiterbildung als Elektromotor ausgestaltet ist.

Besonders präzise ist der Hub steuerbar, wenn der Drehmotor in einer Weiterbildung als Schrittmotor ausgebildet ist.

Erfindungsgemäß hat das Kurvengetriebe eine unmittelbar oder mittelbar drehantriebsfest mit dem Drehmotor verbundene Kurvenscheibe, von der der

Hubkörper zum Zwecke des Hubes mittelbar oder unmittelbar anlenkbar oder angelenkt ist. Vorteil hierbei ist, dass eine Kurvenscheibe derart robust ausgestaltbar ist, dass sie neben der Steuerung des Hubes auch dazu geeignet ist, eine hohe Last des Gutes und des Gut-Trägers aufzunehmen.

Erfindungsgemäß hat die Vorrichtung einen mit Bezug zu einer übergeordneten Baugruppe, insbesondere zu einem Streckenförderer, ortsfest anordenbaren Grundkörper, an dem zumindest das Kurvengetriebe angeordnet ist. Dadurch ist dieses sicher befestigbar und große Lagerkräfte und -momente der Kurvenscheibe können von der Baugruppe aufgenommen werden.

Erfindungsgemäß ist auch der Drehmotor am Grundkörper angeordnet.

In einer besonders kompakten Bauform der Vorrichtung sind der Drehmotor und das Kurvengetriebe vom Hubkörper überdeckt, befinden sich in Hubrichtung betrachtet also vollständig unterhalb des Hubkörpers. Dies bedingt eine Mindestgrundfläche des Hubkörpers, insbesondere eine Mindestspurbreite der Förderbahn der Vorrichtung. Für eine schmaler bauende Förderbahn der Vorrichtung erweist sich eine Weiterbildung als vorteilhaft, in der das Kurvengetriebe vom Hubkörper überdeckt und der zugehörige Drehmotor seitlich versetzt zur Förderbahn der Vorrichtung angeordnet ist. Hierzu kann sich der Grundkörper seitlich über die Förderbahn hinaus gerade oder abgewinkelt erstrecken, wobei der Drehmotor dann am geraden oder am abgewinkelten Abschnitt der Grundplatte befestigt, insbesondere angeflanscht ist.

Die Kurvenscheibe kann direkt mit einer Triebwelle des Drehmotors drehantriebsfest verbunden sein. Alternativ kann sie am Grundkörper drehbar gelagert angeordnet und über ein Getriebe, beispielsweise über ein über- oder untersetztes Ketten- oder Zahnriemengetriebe, drehantriebsfest mit dem Drehmotor verbunden sein.

Erfindungsgemäß ist der Hubkörper, mittels einem Spannmittel, einer Feder, gegen die Kurvenscheibe gespannt. So ist sichergestellt, dass der Hubkörper immer mit der Kurvenscheibe, insbesondere einer Steuerfläche der Kurvenscheibe, in Kontakt ist - also nicht abhebt - sodass die Steuerung des Hubes allzeit kontrolliert erfolgt.

In einer Weiterbildung hat die Kurvenscheibe zur Steuerung des Hubes eine, insbesondere außenumfängliche, Steuerfläche. Diese erstreckt sich zum Bewirken des Hubes vorzugsweise exzentrisch, das heißt in Abhängigkeit eines Umfangswinkels mit veränderlichem Radialabstand zur Drehachse der Kurvenscheibe.

Vorzugsweise sind die Steuerfläche und die Drehachse der Kurvenscheibe parallel, sodass in Richtung dieser Drehachse keine Schubkräfte resultieren.

Die Kopplung mit dem Hubkörper oder dessen Anlenkung erfolgt in einer weitergebildeten Variante, indem die Steuerfläche unmittelbar an einem festen Hubkörperabschnitt, beispielsweise an einem Zapfen oder einem Vorsprung des Hubkörpers, abgleitbar ist. Alternativ dazu kann die Kopplung oder Anlenkung erfolgen, indem an der Steuerfläche ein mit dem Hubkörper drehbar verbundener Wälzkörper abwälzbar ist. Diese Variante erweist sich als verschleißärmer, da im Kontaktbereich des Wälzkörpers mit der Kurvenscheibe weniger Gleitreibung auftritt und in Drehrichtung tangentiale Schubkräfte geringer ausfallen. Dies erweist sich als umso vorteilhafter je höher das Gewicht des Gutes oder Gut-Trägers ist.

Vorzugsweise sind die Drehachse der Kurvenscheibe und die Drehachse des Wälzkörpers parallel.

In einer Variante zur außenumfänglichen Steuerfläche ist diese von einer Randfläche einer innerhalb der Kurvenscheibe ausgebildeten, exzentrischen Führungsnut gebildet. In der Führungsnut ist dann ein mit dem Hubkörper fest verbundener Zapfen oder ein mit dem Hubkörper drehbar verbundener Wälzkörper geführt. Vorteil hierbei ist, dass der Zapfen oder Wälzkörper - und damit der Hubkörper - über die Nut in beiden Hubrichtungen sicher mit der Kurvenscheibe gekoppelt ist. Die Kontrolle über den Hub ist somit für alle Hubrichtungen und auch im Falle großer Hubgeschwindigkeiten gegeben.

In einer Weiterbildung steigt der Radialabstand der Steuerfläche mit zunehmendem Umfangswinkel von einem Minimalwert, bei dem der Hubkörper voll eingezogen ist, hin zu einem Maximalwert, bei dem der Hubkörper voll ausgefahren ist, an.

In einer besonders bevorzugten Weiterbildung erstreckt sich die Steuerfläche umfänglich zumindest abschnittsweise spiralförmig um eine Drehachse der Kurvenscheibe.

Zur detaillierten Steuerung des Hubes und der Hubgeschwindigkeit ist die Steuerfläche in einer Weiterbildung in Umfangsrichtung in Hubabschnitte mit unterschiedlicher Steigung des Radialabstandes unterteilt. Die Steigung errechnet sich dabei aus der Änderung des Radialabstandes pro Änderung des Umfangswinkels. Bei gegebener Drehwinkeländerung des Drehmotors ergeben sich für die verschiedenen Hubabschnitte dann unterschiedliche Hübe und bei gegebener Drehwinkelgeschwindigkeit des Drehmotors unterschiedliche Hubgeschwindigkeiten. So kann ein erster Hubabschnitt beispielsweise einen größeren Gradienten als ein folgender, zweiter Hubabschnitt aufweisen, woraus folgt, dass der Hub des Hubkörpers zunächst schnell und mit Annäherung an einen Scheitel des Hubes langsamer erfolgt.

Um den Hub zu unterbrechen und den Hubkörper während dieser Unterbrechung in einem vergleichsweise stabilen Gleichgewicht zu halten, weist die Steuerfläche in einer Weiterbildung wenigstens einen Rastabschnitt auf. Dieser ist vorzugsweise derart ausgestaltet und an der Steuerfläche angeordnet, dass er in Zusammenwirken mit dem Hubkörper - insbesondere unter Einwirken der Schwerkraft - dessen Verharren in der Rastposition bewirkt. Besonders bevorzugt ist der Rastabschnitt derart ausgestaltet und an der Steuerfläche angeordnet, dass in Zusammenwirken mit dem Hubkörper - insbesondere unter Einwirken der Schwerkraft - die Kurvenscheibe drehmomentfrei ist. Zum Halten des Hubkörpers, des Gut-Trägers und des Gutes ist dann keine Antriebsenergie des Drehmotors nötig.

Beispielsweise ist der wenigstens eine Rastabschnitt in einem Umfangswinkelbereich des Minimalwertes oder des Maximalwertes oder in einem Umfangswinkelbereich zwischen dem Minimalwert und dem Maximalwert angeordnet.

Es können mehrere Rastabschnitte vorgesehen sein.

Vorrichtungstechnisch einfach ist der wenigstens eine Rastabschnitt durch eine konkave Ausnehmung oder Absenkung in Radialrichtung realisiert, in den der Hubkörperabschnitt oder der Wälzkörper eintauchbar ist. Anders ausgedrückt weist der Radialabstand im Bereich des Rastabschnittes ein lokales Minimum auf.

Vorzugsweise sind der wenigstens eine Rastabschnitt und der Hubkörperabschnitt oder Wälzkörper formschlüssig aufeinander abgestimmt ausgebildet. Dabei erweist sich für den Rastabschnitt und den Hubkörperabschnitt eine Zylindersegmentform und für den Wälzkörper eine zylindrische Form als vorteilhaft.

Um den Verschleiß zwischen dem Rastabschnitt und dem Hubkörperabschnitt oder Wälzkörper gering zu halten, sind in einer Weiterbildung in Umfangsrichtung angeordnete Ränder des wenigstens einen Rastabschnittes verrundet.

In einer Weiterbildung hat die Vorrichtung einen Fördermotor zum Antrieb ihres Fördermittels. Somit kann sowohl der Hub als auch das Fördern autark von der bereits erwähnten übergeordneten Baugruppe erfolgen.

Alternativ dazu, insbesondere um die Anzahl von Motoren gering zu halten, hat die Vorrichtung in einer Weiterbildung keinen Fördermotor, sondern nur ein Fördergetriebe, das zur Kopplung mit einem Antrieb einer übergeordneten Baugruppe, insbesondere des Streckenförderers, vorgesehen ist. So ist die Vorrichtung für eine Versorgung mit externer Antriebsenergie vorbereitet.

Ein Streckenförderer hat ein erstes Fördermittel, das entlang einer ersten Förderbahn umläuft. Über die erste Förderbahn kann so beispielsweise ein Gut-Träger mit einem darauf befindlichen Gut oder Werkstück, von einer zur nächsten Arbeitsstation oder zu einer zweiten Förderbahn gefördert werden. Zum Abheben und Versetzen des Gut-Trägers oder des Gutes von der ersten Förderbahn hat der Streckenförderer wenigstens eine gemäß der vorhergehenden Beschreibung ausgebildete, ortsfest an der oder im Bereich der ersten Förderbahn anordenbare oder angeordnete Hub- und Fördervorrichtung. Diese erweist sich aufgrund der oben beschriebenen Bauweise mit Drehmotor und Motorgetriebe zur Wandlung der Drehbewegung in den Hub als vorrichtungstechnisch kompakt, sodass auch der Streckenförderer kompakter ausgestaltet ist.

In einer Weiterbildung hat der Streckenförderer wenigstens ein zweites Fördermittel, das entlang einer zweiten Förderbahn umläuft, auf die das Gut über die Hub- und Fördervorrichtung versetzbar ist.

Dabei verlaufen die Förderbahn der Vorrichtung und die der zweiten Förderbahn in Reihe oder gleichgerichtet.

Die erste Förderbahn verläuft zur zweiten Förderbahn in Reihe oder kreuzend.

Ein Ausführungsbeispiel eines erfindungsgemäßen Streckenförderers und mehrere Ausführungsbeispiele einer erfindungsgemäßen Hub- und Fördervorrichtung sind in den Zeichnungen dargestellt. Anhand der Figuren dieser Zeichnungen wird die Erfindung nun näher erläutert.

Es zeigen:
Figur 1 einen Streckenförderer gemäß einem Ausführungsbeispiel in perspektivischer Ansicht,
Figur 2 eine Hub- und Fördervorrichtung des Streckenförderers gemäß Figur 1, gemäß einem ersten Ausführungsbeispiel, in perspektivischer Ansicht,
Figur 3 eine erfindungsgemäße Hub- und Fördervorrichtung gemäß einem zweiten Ausführungsbeispiel, in perspektivischer Ansicht,
Figur 4 bis 4c drei Ausführungsbeispiele einer erfindungsgemäßen Hub- und Fördervorrichtung mit integriertem Förderantrieb,
Figur 5a bis 5c drei Ausführungsbeispiele einer erfindungsgemäßen Hub- und Fördervorrichtung ohne integrierten Förderantrieb,
Figur 6 die Hub- und Fördervorrichtung gemäß Figur 3 und 4b in einer Frontansicht,
Figur 7 die Hub- und Fördervorrichtung gemäß Figur 2 und 5b in einer Frontansicht,
Figur 8 eine über alle Ausführungsbeispiele gleiche Hubeinrichtung der Hub- und Fördervorrichtung,
Figur 9 ein Ausführungsbeispiel eines Kurvengetriebes der erfindungsgemäßen Hub-und Fördervorrichtung, und
Figur 10 ein zweites Ausführungsbeispiel eines Kurvengetriebes der erfindungsgemäßen Hub- und Fördervorrichtung.

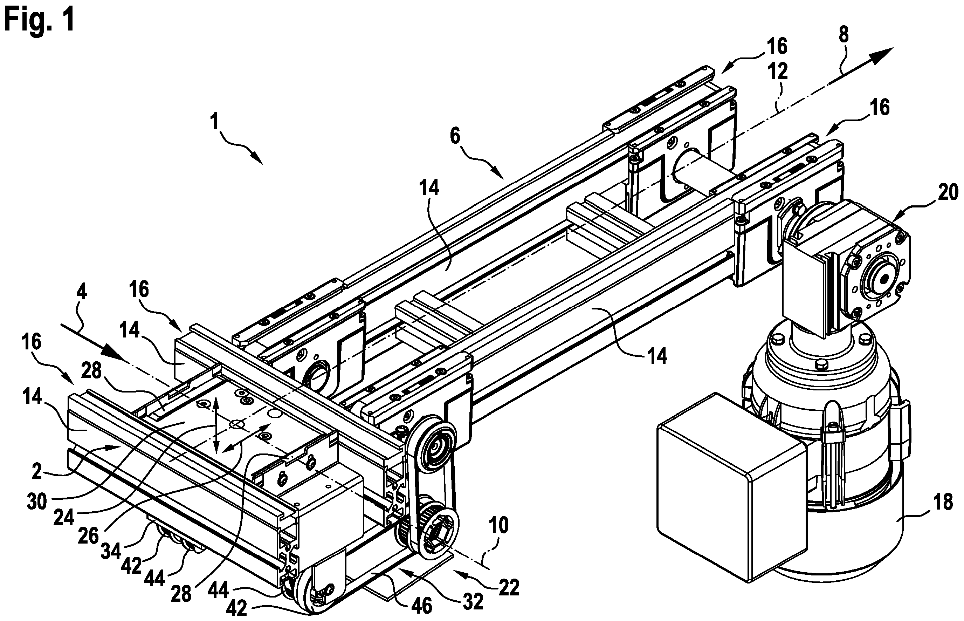

Gemäß Figur 1 hat ein Streckenförderer 1 eine erste Förderlinie oder Förderbahn 2 mit einer ersten Förderrichtung 4 und rechtwinklig dazu eine zweite Förderlinie oder zweite Förderbahn 6 mit einer zweiten Förderrichtung 8. Beide Förderlinien 2, 6 sind im Wesentlichen baugleich aus den gleichen Komponenten ausgestaltet. Sie haben jeweils parallel zu einer Mittelachse 10, 12 angeordnete Profilträger 14 an denen in bekannter Weise ein als Zahnriemen ausgestaltetes, zweistrangiges Fördermittel 16 umläuft. Auf dem Fördermittel 16 ist dabei ein Gut- oder Werkstück-Träger (nicht dargestellt) aufsetzbar und durch die Förderbewegung des Fördermittels 16 transportierbar.

Der Streckenförderer 1 hat einen Antriebsmotor 18, der über ein Getriebe 20 mit in den Profilen 14 der zweiten Förderlinie 6 aufgenommenen Riemenscheiben drehantriebsfest verbunden ist. Auf diese Weise wird das Fördermittel 16 der zweiten Förderlinie 6 angetrieben. Eine vergleichbare Antriebsmaschine, weist auch die erste Förderlinie 2 auf (nicht dargestellt).

Von den Profilen 14 der ersten Förderlinie 2 beidseitig eingefasst ist eine Hub- und Fördervorrichtung 22, die dazu dient, einen Werkstückträger von der ersten Förderbahn 2 auf die zweite Förderbahn 6 zu versetzen. Dabei ist die Hub- und Fördervorrichtung 22 in der Lage, einen vertikalen Hub 24 und eine translatorische Versatzbewegung 26 des Werkstückträgers zu bewirken. Auch die Hub- und Fördervorrichtung 22 hat ein als zweistrangiges Fördermittel 28. Dieses ist an einem Träger oder Hubkörper 30 der Vorrichtung 22 zu einer Förderbahn umgelenkt. Dabei ist ein Fördergetriebe 32 mit Riemenscheiben und Zahnriemen vorgesehen, über das Antriebsenergie vom Antriebsmotor 18 auf das Fördermittel 28 der Vorrichtung 22 übertragbar ist.

Über einen Grundkörper oder eine Grundplatte 34 ist die Hub- und Fördervorrichtung 22 mit den Profilen 14 der ersten Förderlinie 2 fest verbunden.

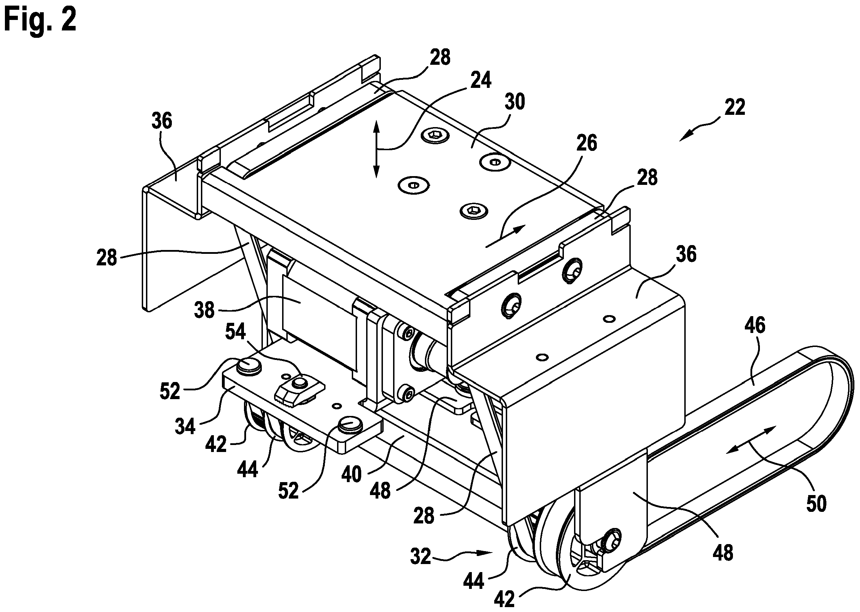

Figur 2 zeigt die Hub- und Fördervorrichtung 22 gemäß Figur 1 vom Rest des Streckenförderers 1 gemäß Figur 1 freigestellt. Am Hubkörper 30 sind lateral außerhalb der beiden Stränge des Fördermittels 28 Abdeckbleche 36 befestigt. Diese erstrecken sich vom Hubkörper 30 nach unten in Richtung der Grundplatte 34 mit einer nach außen abgewinkelten Schulter. Auf der Grundplatte 34 ist ein Elektro-Schrittmotor 38 befestigt, über den der Hub 24 des Hubkörpers 30 bewirkt wird.

An Endabschnitten einer auf die Hubrichtung 24 bezogen unten angeordneten Antriebswelle 40 sind jeweils zwei Riemenscheiben 42, 44 drehfest angeordnet. Dabei läuft das Fördermittel 28 der Hub-Fördervorrichtung 22, genauer gesagt der Zahnriemen, an der jeweils inneren 44 der Riemenscheiben 42, 44 um und wird an am Hubkörper 30 gelagerten Umlenkwellen (nicht dargestellt) zweifach umgelenkt. Der Antrieb der Antriebswelle 40 erfolgt über die lateral außen angeordneten Riemenscheiben 42, die von einem Zahnriemen 46 umschlungen sind. Gemäß Figur 1 wird dieser Zahnriemen 46 über eine weitere Riemenscheiben- und Zahnriemenanordnung mittels dem Getriebe 20 vom Antriebsmotor 18 angetrieben.

Die Antriebswelle 40 ist dabei in einem u-förmig nach unten abgewinkelten Blechprofil 48 drehbar und in einer Richtung 50 gleitend gelagert. Gemäß Figur 2 ist die Vorrichtung 22 über vier Schrauben 52 (zwei davon verdeckt) und zwei Profilmuttern 54 (eine davon verdeckt), die in Profilausnehmungen der Profile 14 eingreifen, mittels der Grundplatte 34 an den Profilen 14 befestigt. Ortsfest angeordnet sind somit die Grundplatte 34 und alle fest mit ihr verbundenen Komponenten, insbesondere der Elektro-Schrittmotor 38. Relativ zur Grundplatte hubfähig angeordnet sind hingegen der Hubkörper 30, die daran befestigte Abdeckbleche 36, das Fördermittel 28 und das über das Fördermittel 28 zugfest mit dem Hubkörper 30 verbundene Fördergetriebe 32.

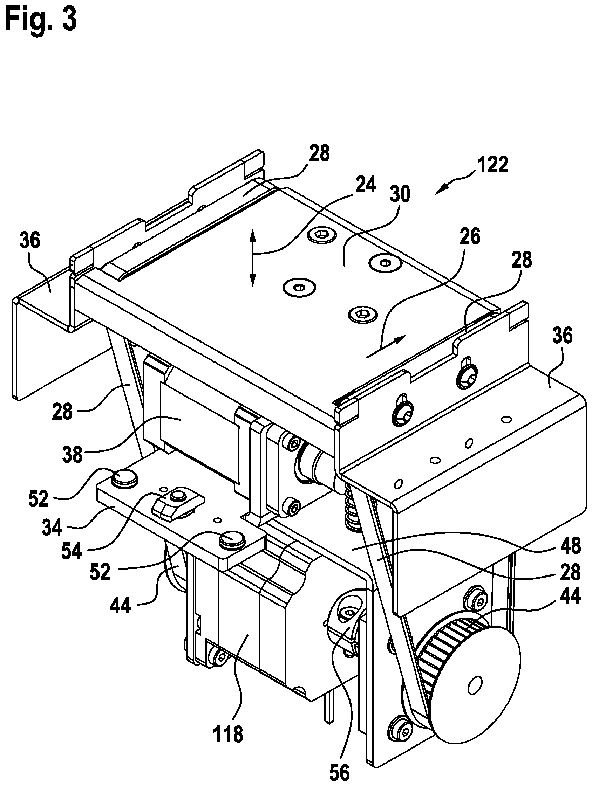

Figur 3 zeigt ein zweites Ausführungsbeispiel einer Hub- und Fördervorrichtung 122, die in wesentlichen Teilen derjenigen gemäß Figur 1 und 2 entspricht. Es wird daher lediglich auf die Unterschiede eingegangen. Wie bereits beschrieben, wird das Fördermittel 28 der Hub- und Fördervorrichtung 22 gemäß Figur 2 über den Zahnriemen 46 und gemäß Figur 1 die Antriebsmaschine 18 der zweiten Förderlinie 6 angetrieben. Auf diese Weise konnte für verschiedene Förderaufgaben, diejenige der zweiten Förderlinie 6 und diejenige der Hub- und Fördervorrichtung 22, ein gemeinsamer Antriebsmotor 18 genutzt werden, was vorrichtungstechnischen Aufwand verringert.

Flexibler steuerbar und unter Verzicht des vergleichsweise aufwendigen Fördergetriebes 22 ist jedoch eine Lösung, wie sie das Ausführungsbeispiel gemäß Figur 3 zeigt. Dies beruht darauf, dass hier ein dezentraler Antriebsmotor 118 vorgesehen ist, der das Fördermittel 28 der Vorrichtung 122 unabhängig vom Antriebmotor 18 antreibt. Es handelt sich dabei um einen Direktantrieb, wobei eine der Riemenscheiben 44 direkt und die andere mittels einer Kupplung 56 mit einer Triebwelle des Antriebsmotors 118 drehfest verbunden ist.

Gemäß Figur 3 ist erkenntlich, dass die Bauhöhe in Hubrichtung 24 dieses Ausführungsbeispiels vergleichen mit dem vorhergehenden Ausführungsbeispiel etwas größer ausfällt, da Bauraum für den vergleichsweise hoch bauenden Antriebsmotor 118 vorzusehen ist.

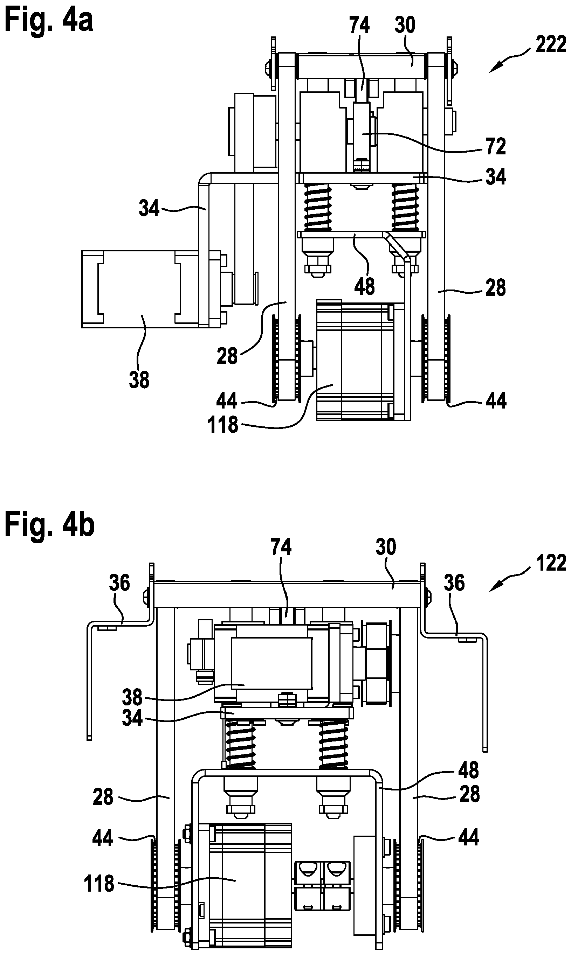

Die Figuren 4a bis 4c zeigen Ausführungsbeispiele einer Hub- und Fördervorrichtung 222; 122; 322, wobei die Hub- und Fördervorrichtung 122 gemäß Figur 4b derjenigen der Figur 3 entspricht. Gemeinsam haben die Hub- und Fördervorrichtungen 122; 222 und 322, dass ihr Fördermittel 28 autark über den Antriebsmotor 118 mit Antriebsenergie versorgt wird. Dabei wächst eine Spurbreite des Fördermittels 28, das heißt, ein Abstand der beiden Zahnriemen des Fördermittels 28 quer zur Förderrichtung, von der Hub- und Fördervorrichtung 222 über die Hub- und Fördervorrichtung 122 hin zur Hub- und Fördervorrichtung 322 an. Dies zeigt sich in den Figuren 4a bis 4c an der Breite des jeweiligen Hubkörpers 30. Für die besonders schmal bauende Hub- und Fördervorrichtung 222 bedeutet das, dass der Elektro-Schrittmotor 38 lateral ausgelagert angeordnet sein muss und nicht mehr zwischen den Zahnriemen 28 angeordnet sein kann. Dies wird erreicht, indem die Grundplatte 34 sich einseitig lateral über den Hubkörper 30 hinaus erstreckt und nach unten abgewinkelt ist. An dem abgewinkelten Abschnitt der Grundplatte 34 ist der Elektro-Schrittmotor 38 mit seiner Stirnseite angeflanscht.

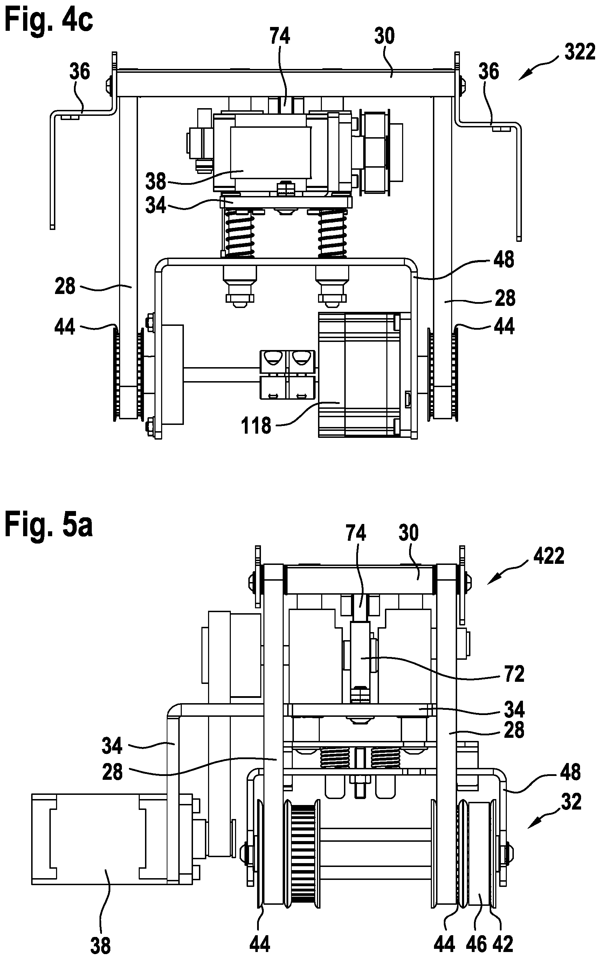

Bei breiterer Spur und breiterem Hubkörper 30 gemäß Figur 4b und 4c ist dies hingegen nicht notwendig und der Elektro-Schrittmotor 38 kann platzsparend mittig auf der Grundplatte 34 zwischen den beiden Zahnriemen des Fördermittels 28 angeordnet sein. Die Hub- und Fördervorrichtung 322 gemäß Figur 4c entspricht derjenigen gemäß Figur 4b und weist lediglich eine um etwa 50% breitere Spur auf.

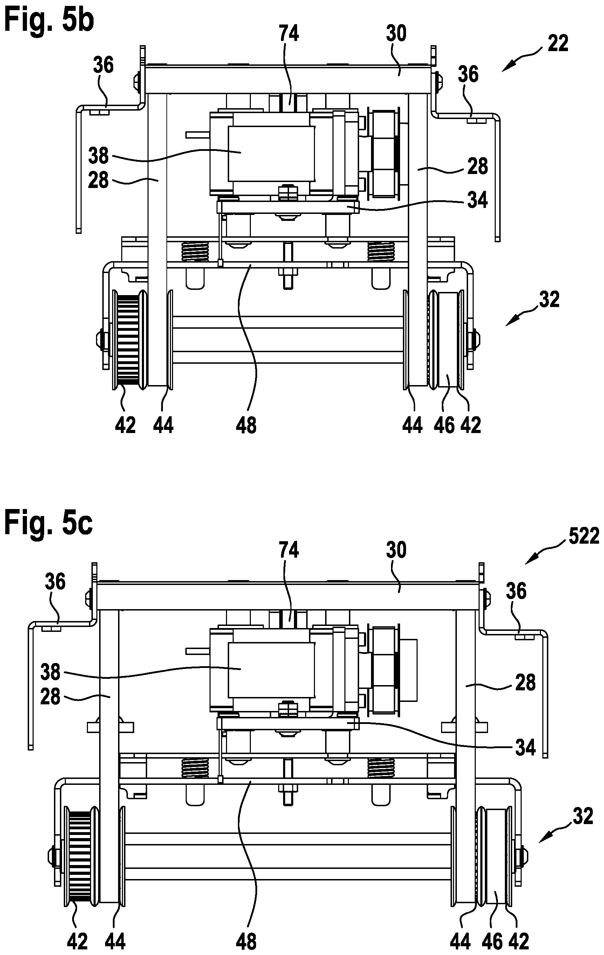

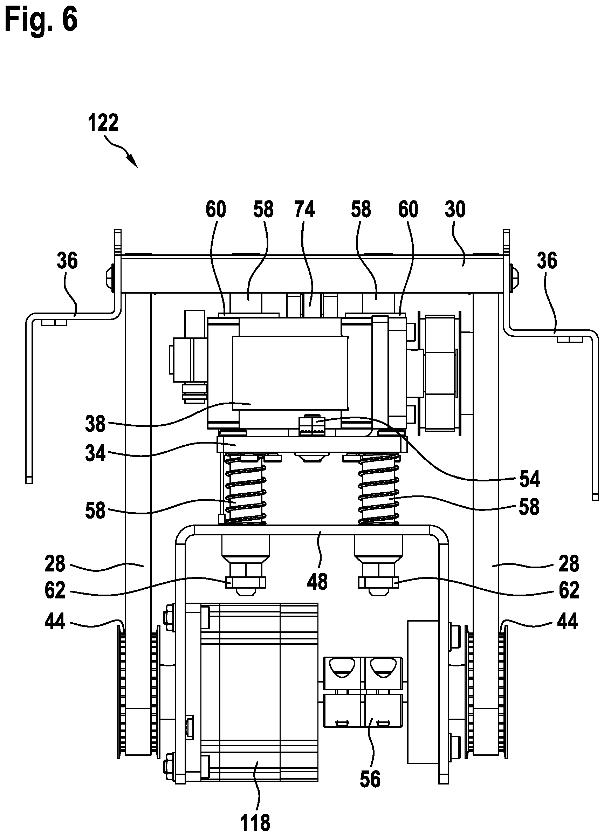

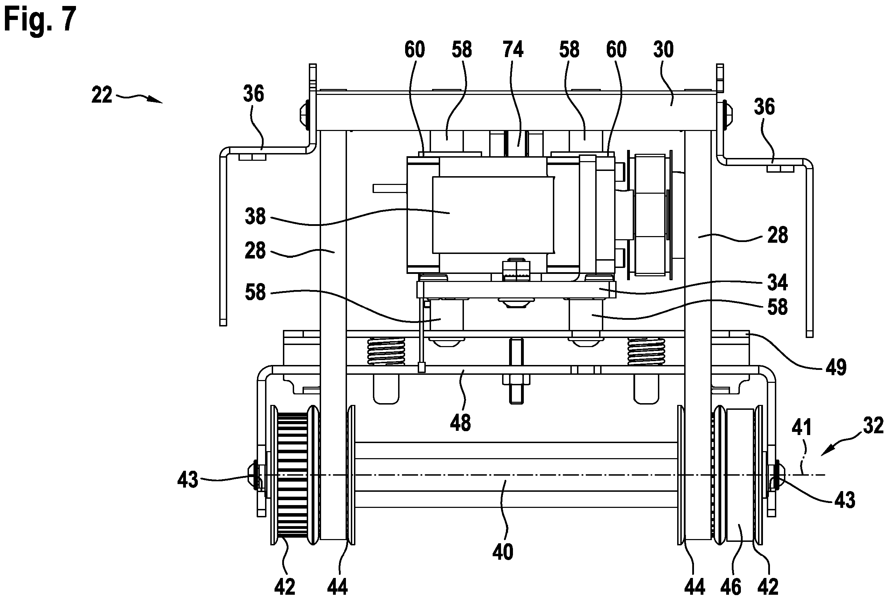

Die Figuren 5a bis 5c zeigen Ausführungsbeispiele einer Hub- und Fördervorrichtung 422; 22; 522, wobei die Hub- und Fördervorrichtung 22 gemäß Figur 5b derjenigen gemäß Figur 2 entspricht. Dabei sind die gleichen Spurbreiten realisiert, wie sie die Ausführungsbeispiele gemäß den Figuren 4a bis 4c zeigen. Ein wesentlicher Unterschied zu den Ausführungsbeispielen gemäß den Figuren 4a bis 4c ist, dass das Fördermittel 28 der Hub- und Fördervorrichtungen 422; 22; 522 nicht von einem integrierten Antriebsmotor (vgl. 118 Figuren 4a bis 4c), sondern über das Fördergetriebe 32 (vgl. Figur 2) angetrieben wird. Auf weitere Gemeinsamkeiten und Abweichungen dieser beiden Konzepte - einmal mit integriertem Förderantrieb 118, einmal ohne - wird in den nächsten beiden Figuren 6 und 7 anhand der Ausführungsbeispiele gemäß den Figuren 2, 5b und 3, 4b näher eingegangen.

Figur 6 zeigt das zweite Ausführungsbeispiel der Hub- und Fördervorrichtung 122 gemäß den Figuren 3 und 4b in einer Frontansicht in Richtung der Förderrichtung. Fest mit dem Hubkörper 30 sind unterseitig zwei Führungssäulen 58 verbunden, die sich nach unten durch Wellenlagerböcke 60 und die Grundplatte 34, sowie das Blechprofil 48 hindurch erstrecken. Auf diese Weise ist der Hubkörper 30 über die Führungssäulen 58 linear geführt und relativ zur Grundplatte 34 und den daran angeordneten Komponenten hubbeweglich. Auf die Führungssäulen 58 sind Druckfedern aufgeschoben und zwischen der Grundplatte 34 und dem Blechprofil 48 vorgespannt.

Auf diese Weise wird das Blechprofil 48 gemäß Figur 6 von der Grundplatte 34 nach unten weggespannt. Auf diese Weise werden die Stränge des Fördermittels 28 vorgespannt. Angetrieben vom Elektro-Schrittmotor 38 wird ein Hub des Hubkörpers 30 erzeugt und über die beschriebene Zugverbindung des Fördermittels 28 wird die komplette Einheit aus Blechprofil 48, Antriebsmotor 118, Kupplung 56 und Riemenscheiben 44 in Hubrichtung mitgenommen. Wird über den Elektro-Schrittmotor 38 der Hub in entgegengesetzter Richtung gefahren, der Hubkörper also abgesenkt, so sorgen die Druckfedern für das Absenken der Einheit aus Antriebsmotor 118 und Riemenscheiben 44 und über die Zugspannung des Fördermittels 28 für den steten Kontakt des Hubkörpers 30 am den Hub steuernden Kurvengetriebe (verdeckt). Weiterhin sind Feinjustagemuttern 62 zum Einstellen der Vorspannung des Fördermittels 28vorgesehen.

Figur 7 zeigt das Ausführungsbeispiel gemäß den Figuren 2 und 5b in einer Frontansicht, wie sie auch in Figur 6 gewählt wurde. Wie bereits erwähnt, ist der wesentliche Unterschied zum vorbeschriebenen Ausführungsbeispiel der Antrieb des Fördermittels 28 mittels dem Fördergetriebe 32 und dem dezentralen Antriebsmotor 18 (vergleiche Figur 1). Betrachtet man das Fördergetriebe 32 gemäß Figur 1, wie es auch für die Ausführungsbeispiele gemäß den Figuren 5a, 5b und 5c verwendet wird, so wird ersichtlich, dass beim Ausführen des Hubes 24 die Riemenscheiben 42 und damit die Antriebswelle 40 vom Zahnriemen 46 in eine kreissegmentförmige Bewegung gezwungen werden. Die Antriebswelle 40 hat somit eine Bewegungskomponente in Hubrichtung 24 und quer dazu. Da der Hubkörper 30 und die Führungssäulen 58 jedoch aufgrund ihrer festen linearen Führung in der Grundplatte 34 und den Wellenlagerböcken 60 nur die Bewegung des Hubes 24 durchführen können, muss eine Relativbewegung der Antriebswelle 40 in Richtung des Pfeiles 50 gemäß Figur 2 ermöglicht werden. Dies erfolgt über die konstruktive Zweiteilung in Blechprofil 48 und Aufnahmeblech 49 gemäß Figur 7. Zudem ist die Antriebswelle 40 in schlitzartigen Aufnahmeausnehmungen 43, die in Richtung des Pfeiles 50 gemäß Figur 2 verlaufen, gleitend gelagert.

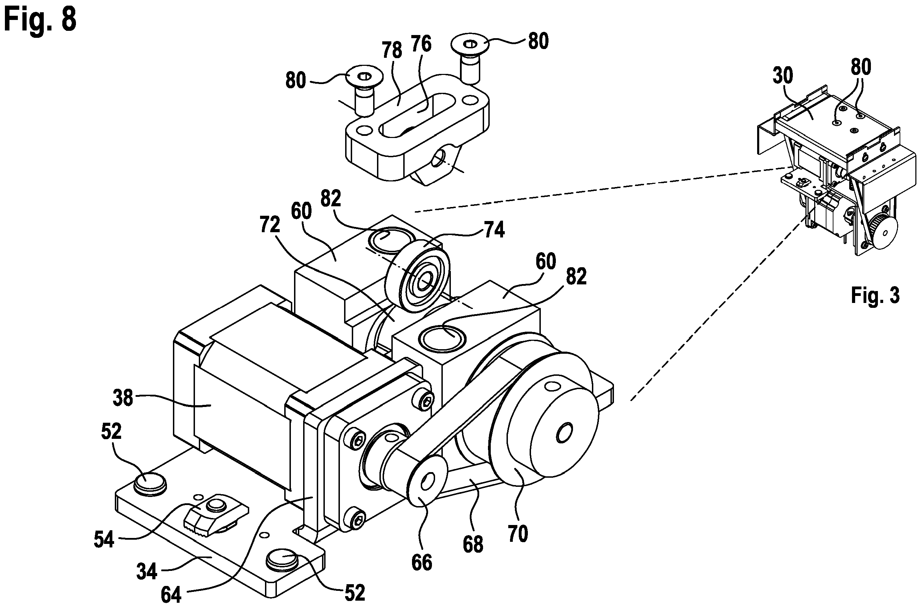

Figur 8 zeigt eine Hubeinrichtung, die in den Hub- und Fördervorrichtung 22; 122; 322; 522 verbaut ist und den Hub 24 bewirkt. Beispielhaft ist in Figur 8 rechts oben eine verkleinerte Figur 3 der Hub- und Fördervorrichtung 122 dargestellt, um den darin von der Hubeinrichtung beanspruchten räumlichen Bereich zu veranschaulichen. Zu erkennen ist die bereits erwähnte, massive Grundplatte 34 mit den Schrauben 52 und der Profilmutter 54 zur Befestigung der Grundplatte am Profil 14 gemäß Figur 1. Von der Grundplatte 34 abgewinkelt ist ein Flanschabschnitt 64, an den der Elektro-Schrittmotor 38 mit seiner Stirnseite angeflanscht ist. Der Flanschabschnitt 64 ist dabei von der Triebwelle des Elektro-Schrittmotors 38 durchsetzt, an deren Endabschnitt eine Zahnriemenscheibe 66 drehfest angeordnet ist. Über einen Zahnriemen 68 ist diese wiederum drehfest mit einer Zahnriemenscheibe 70 größeren Umfangs verbunden. Die Zahnriemenscheibe 70 ist dabei drehfest mit einer Welle (nicht dargestellt) verbunden, die an Wellenlagerböcken 60 drehbar gelagert ist. Mittig zwischen den Wellenlagerböcken 60 ist eine Kurvenscheibe 72 eines Kurvengetriebes angeordnet, an deren außenumfänglicher Steuerfläche ein Wälzkörper 74 abwälzt. Letztgenannter ist in einem Schlitz 76 eines Rollenlagers 78 drehbar gelagert. Das Rollenlager 78 und der Wälzkörper 74 sind dabei in Explosionsdarstellung dargestellt. Das Rollenlager 78 ist über Schrauben 80 unterseitig am Hubkörper 30 befestigt. Die Wellenlagerböcke 60 sind von Durchgangsausnehmung 82 durchsetzt, die gemäß den vorangegangenen Figuren bei allen Ausführungsbeispielen von den Führungssäulen 58 durchgriffen sind (nicht dargestellt).

Beim schrittweisen Drehen der Zahnriemenscheibe 66 über den Elektro-Schrittmotor 38 wird die Drehung mit Untersetzung auf die Zahnriemenscheibe 70 und somit auf die Kurvenscheibe 72 übertragen. An deren Steuerfläche 86 rollt der Wälzkörper 74 mit geringer Reibung ab. Aufgrund der exzentrischen Form der Steuerfläche 86 der Kurvenscheibe 72 wird der Wälzkörper 74, und damit der Hubkörper 30, in Hubrichtung 24 bewegt.

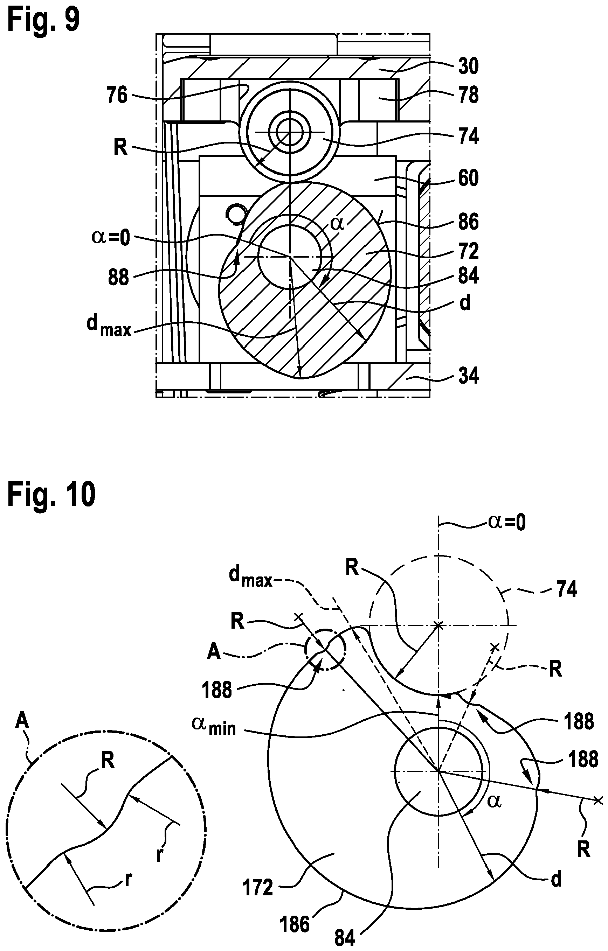

Figur 9 verdeutlicht für alle Ausführungsbeispiele der vorangegangenen Figuren die Zusammenhänge im Bereich der Kurvenscheibe 72 anhand eines Schnittes, der quer durch den Wälzkörper 74 und die Kurvenscheibe 72 geführt ist. Die Kurvenscheibe 72 ist drehfest mit der Welle 84 verbunden und erstreckt sich in Wellenrichtung zylindrisch mit einem geoiden Querschnitt. Dabei variiert ein Radialabstand d der außenumfänglichen Steuerfläche 86 der Kurvenscheibe 72 mit deren Umfangswinkel a. Ausgehend von einem Wert α = 0 mit kleinstem Radialabstand dₘᵢₙ nimmt der Radialabstand d mit zunehmendem Umfangswinkel α im Wesentlichen bis zu einem Maximalwert dₘₐₓ zu. Bei weiter ansteigendem Umfangswinkel α nimmt der Radialabstand d wieder auf den Minimalwert dₘᵢₙ bei α = 0 ab. Die Zunahme des Radialabstandes d bis zum Maximalwert dₘₐₓ hat dabei etwa den Verlauf einer Spiralfunktion. Gleiches gilt für die Abnahme des Radialabstandes d, ausgehend vom Maximalwert dₘₐₓ bis zum Minimalwert dₘᵢₙ bei α = 0.

Figur 10 zeigt ein zweites Ausführungsbeispiel einer Kurvenscheibe 172, mittels der der Hubkörper 30 in mehreren Zwischen- oder Haltepositionen rastbar ist. Ausgehend von einem minimalem Radialabstand dₘᵢₙ bei α = 0 wächst der Radialabstand d mit zunehmendem Umfangswinkel α bis zu einem Maximalwert dₘₐₓ an. Weist die Kurvenscheibe 72 Figur 9 ihren Scheitel dₘₐₓ etwa bei einem Umfangswinkel von 240° auf, so erreicht die Kurvenscheibe 172 gemäß Figur 10 den Scheitel dₘₐₓ erst bei einem Umfangswinkel α von etwa 330°. Zwischen α = 0 und α = 330° wächst der Radialabstand d im Wesentlichen mit einer Spiralfunktion an. Der stetige Anstieg ist dabei jedoch von drei Bereichen oder Rastabschnitten 188 der Steuerfläche 186 unterbrochen. Hier weist der Radialabstand d jeweils ein lokales Minimum auf, wodurch die Steuerfläche 186 an dieser Stelle eine nach radial innen konkav ausgebildete Ausnehmung 188 aufweist. Der Radius R der Ausnehmung 188 ist dabei identisch mit dem Radius R des Wälzkörpers 74, wodurch beide in formschlüssigen Eingriff geraten, wenn der dem Rastabschnitt 188 entsprechende Drehwinkel vom Elektro-Schrittmotor 38 eingestellt wird. Auf diese Weise kann der Hubkörper 30 durch die leichte Verrastung des Wälzkörpers 74 mit der Kurvenscheibe 172 in einer drehmomentfreien Position gehalten werden.

Offenbart ist eine Hub- und Fördervorrichtung mit einem Hubkörper und einem daran umlaufenden Fördermittel zum Transport eines Gutes, wobei zur Erzeugung des linearen Hubes des Hubkörpers ein Drehantrieb und ein Getriebe zur Wandlung der Drehung des Drehantriebes in den Hub vorgesehen sind. Offenbart ist weiterhin ein Streckenförderer mit wenigstens einer ersten Förderbahn und einer derartigen Hub- und Fördervorrichtung, um das zu fördernde Gut von der ersten Förderbahn zu versetzen.

### Bezugszeichenliste:

- 1: Streckenförderer
- 2: erste Förderlinie
- 4: erste Förderrichtung
- 6: zweite Förderlinie
- 8: zweite Förderrichtung
- 10: erste Förderachse
- 12: zweite Förderachse
- 14: Profil
- 16: zweistrangiges Fördermittel
- 18; 118: Antriebsmotor
- 20: Getriebe
- 22; 122; 222;: Hub- und Fördervorrichtung
- 322; 422; 522:
- 24: Förderrichtung
- 28: zweistrangiges Fördermittel
- 30: Hubkörper
- 32: Fördergetriebe
- 34: Grundplatte
- 36: Abdeckblech
- 38: Elektro-Schrittmotor
- 40: Antriebswelle
- 42: Riemenscheibe
- 43: Lageraufnahme
- 44: Riemenscheibe
- 46: Zahnriemen
- 48: Blechprofil
- 49: Aufnahmeblech
- 50: Gleitrichtung
- 52: Schraube
- 54: Profilmutter
- 56: Kupplung
- 58: Führungssäule
- 60: Wellenlagerbock
- 62: Feinjustagemutter
- 64: Flanschabschnitt
- 66: Zahnriemenscheibe
- 68: Zahnriemen
- 70: Zahnriemenscheibe
- 72; 172: Kurvenscheibe
- 74: Wälzkörper
- 76: Schlitz
- 78: Rollenlager
- 80: Schraube
- 82: Durchgangsausnehmung
- 84: Welle
- 86; 186: Steuerfläche
- 88; 188: Rastabschnitt

## Patentansprüche

1. Hub- und Fördervorrichtung mit einem Hubkörper (30), an dem ein umlaufendes Fördermittel (28) zu einer Förderbahn, auf der ein Gut förderbar ist, umgelenkt ist, und der für einen Hub (24) der Förderbahn von einem Linearantrieb (38, 72; 38, 172) der Vorrichtung (22; 122; 222; 322; 422; 522) anlenkbar oder angelenkt ist, wobei der Linearantrieb (38, 72; 38, 172) einen Drehmotor (38) und ein Motorgetriebe (72; 172) zur Wandlung eines Drehwinkels in den Hub (24) aufweist, wobei das Motorgetriebe eine drehantriebsfest mit dem Drehmotor verbundene Kurvenscheibe (72; 172) aufweist, von der der Hubkörper (30) mittelbar oder unmittelbar anlenkbar oder angelenkt ist, mit einem mit Bezug zu einer übergeordneten Baugruppe (1), insbesondere einem Streckenförderer, ortsfest anordenbaren Grundkörper (34), an dem der Drehmotor (38) mit der Kurvenscheibe (72; 172) angeordnet ist, **dadurch gekennzeichnet, dass** der Hubkörper (30) gegen die Kurvenscheibe (72; 172) gespannt ist,
wobei der Grundkörper eine Grundplatte (34) ist,
wobei der Hubkörper (30) gegen die Kurvenscheibe (72; 172) gespannt ist,
wobei fest mit dem Hubkörper (30) unterseitig zwei Führungssäulen (58) verbunden sind, die sich nach unten durch Wellenlagerböcke (60) und der Grundplatte (34), sowie ein Blechprofil (48) hindurch erstrecken,
sodass der Hubkörper (30) über die Führungssäulen (58) linear geführt und relativ zur Grundplatte (34) und den daran angeordneten Komponenten hubbeweglich ist,
und wobei auf die Führungssäulen (58) Druckfedern aufgeschoben und zwischen der Grundplatte (34) und dem Blechprofil (48) vorgespannt sind.

2. Vorrichtung nach Anspruch 1, wobei der Drehmotor von einem Elektromotor insbesondere einem Schrittmotor (38) gebildet ist.

3. Vorrichtung nach Anspruch 1, wobei eine exzentrische Steuerfläche (86; 186)
der Kurvenscheibe (72; 172) einen in Abhängigkeit eines Umfangswinkels (a)
der Kurvenscheibe (72; 172) veränderlichen Radialabstand (d) zur Drehachse
der Kurvenscheibe (72; 172) hat.

4. Vorrichtung nach einem der Ansprüche 1 und 3, wobei eine exzentrische Steuerfläche (86; 186) der Kurvenscheibe (72; 172) an einem Hubkörperabschnitt abgleitbar oder an einem mit dem Hubkörper (30) drehbar verbundenen Wälzkörper (74) abwälzbar ist.

5. Vorrichtung nach einem der Ansprüche 3 bis 4, wobei der Radialabstand (d) mit zunehmendem Umfangswinkel (α) von einem Minimalwert (dₘᵢₙ) hin zu einem Maximalwert (dₘₐₓ) steigt, und / oder wobei der Radialabstand (d) mit zunehmendem Umfangswinkel (α) von einem Minimalwert (dₘᵢₙ) hin zu einem Maximalwert (dₘₐₓ) steigt und dann wieder absinkt.

6. Vorrichtung nach einem der Ansprüche 3 bis 5, wobei die Steuerfläche (86;
186) in Umfangsrichtung in Hubabschnitte unterteilt ist, die bei konstanter Drehgeschwindigkeit der Kurvenscheibe (72; 172) unterschiedliche Hubgeschwindigkeiten bewirken.

7. Vorrichtung nach einem der Ansprüche 3 bis 6, wobei die Steuerfläche (86;
186) in Umfangsrichtung in wenigstens einen Rastabschnitt (88; 188) unterteilt ist, der einen Halt des Hubkörpers (30) bewirkt.

8. Vorrichtung zumindest nach Anspruch 5 und 7, wobei der wenigstens eine Rastabschnitt (88; 188) in einem Umfangswinkelbereich des Minimalwertes (dₘᵢₙ) oder des Maximalwertes (dₘₐₓ) oder in einem Umfangswinkelbereich zwischen dem Minimalwert (dₘᵢₙ) und dem Maximalwert (dₘₐₓ) angeordnet ist.

9. Vorrichtung nach Anspruch 7 oder 8, wobei der wenigstens eine Rastabschnitt (88; 188) eine konkave Ausnehmung oder Absenkung aufweist, in den der Hubkörperabschnitt oder Wälzkörper (74) zumindest abschnittsweise eintauchbar ist.

10. Vorrichtung nach einem der Ansprüche 7 bis 9, wobei der wenigstens eine Rastabschnitt (88; 188) formschlüssig mit dem Hubkörperabschnitt oder einem Abschnitt des Wälzkörpers (74) anordenbar ist.

11. Vorrichtung nach einem der Ansprüche 7 bis 10, wobei in Umfangsrichtung angeordnete Ränder (r) des wenigstens einen Rastabschnittes (88; 188) verrundet sind.

12. Vorrichtung nach einem der vorhergehenden Ansprüche mit einem Fördermotor (118) zum Antrieb des Fördermittels (28), und / oder mit einem Fördergetriebe (32) zur Kopplung mit einem Antrieb (18) einer übergeordneten Baugruppe (1), insbesondere eines Streckenförderers.

13. Streckenförderer mit einem ersten Fördermittel (16), das entlang einer ersten Förderbahn (2) umläuft, und mit einer gemäß einem der vorhergehenden Ansprüche ausgebildeten, ortsfest an der ersten Förderbahn (2) anordenbaren oder angeordneten Vorrichtung (22) zum Abheben und Versetzen des Gutes von der ersten Förderbahn (2).

## Claims

1. Lifting and conveying device having a lifting body (30) on which a circulating conveyor means (28) is deflected to form a conveyor track on which an item is able to be conveyed, and which is articulated or able to be articulated by a linear drive (38, 72; 38, 172) of the device (22; 122; 222; 322; 422; 522) for lifting (24) the conveyor track, wherein the linear drive (38, 72; 38, 172) has a rotary motor (38) and a motor gear (72; 172) for converting an angle of rotation into the lift (24), wherein the motor gear has a cam disc (72; 172) which is fixedly connected in terms of rotational drive to the rotary motor and by which the lifting body (30) is indirectly or directly articulated or able to be articulated, and having a base body (34) which is able to be arranged in a fixed position with regard to a superordinate assembly (1), in particular a drift conveyor, and on which the rotary motor (38) with the cam disc (72; 172) is arranged, **characterized in that** the lifting body (30) is tensioned against the cam disc (72; 172), wherein the base body is a base plate (34), wherein the lifting body (30) is tensioned against the cam disc (72; 172), wherein two guide pillars (58) are fixedly connected to the underside of the lifting body (30), said guide pillars (58) extending downward through shaft bearing blocks (60) and the base plate (34), and through a sheet-metal profile (48), such that the lifting body (30) is guided linearly via the guide pillars (58) and is able to be lifted relative to the base plate (34) and the components arranged thereon, and wherein compression springs are pushed onto the guide pillars (58) and are pretensioned between the base plate (34) and the sheet-metal profile (48).

2. Device according to Claim 1, wherein the rotary motor is formed by an electric motor, in particular a stepping motor (38).

3. Device according to Claim 1, wherein an eccentric control surface (86; 186) of the cam disc (72; 172) has a radial spacing (d) from the axis of rotation of the cam disc (72; 172) that is variable depending on a circumferential angle (α) of the cam disc (72; 172).

4. Device according to either of Claims 1 and 3, wherein an eccentric control surface (86; 186) of the cam disc (72; 172) is able to slide on a lifting body portion or is able to roll on a rolling body (74) rotatably connected to the lifting body (30).

5. Device according to either of Claims 3 and 4, wherein the radial spacing (d) increases with an increase in the circumferential angle (α) from a minimum value (dₘᵢₙ) to a maximum value (dₘₐₓ), and/or wherein the radial spacing (d) increases with an increase in the circumferential angle (α) from a minimum value (dₘᵢₙ) to a maximum value (dₘₐₓ) and then decreases again.

6. Device according to one of Claims 3 to 5, wherein the control surface (86; 186) is divided in the circumferential direction into lifting portions which bring about different lifting speeds at a constant rotational speed of the cam disc (72; 172).

7. Device according to one of Claims 3 to 6, wherein the control surface (86; 186) is divided in the circumferential direction into at least one latching portion (88; 188) which brings the lifting body (30) to a stop.

8. Device at least according to Claims 5 and 7, wherein the at least one latching portion (88; 188) is arranged in a circumferential angle region of the minimum value (dₘᵢₙ) or the maximum value (dₘₐₓ) or in a circumferential angle region between the minimum value (dₘᵢₙ) and the maximum value (dₘₐₓ).

9. Device according to Claim 7 or 8, wherein the at least one latching portion (88; 188) has a concave recess or depression into which the lifting body portion or rolling body (74) is able to dip at least partially.

10. Device according to one of Claims 7 to 9, wherein the at least one latching portion (88; 188) is able to be arranged in a form-fitting manner with the lifting body portion or a portion of the rolling body (74).

11. Device according to one of Claims 7 to 10, wherein edges (r), arranged in the circumferential direction, of the at least one latching portion (88; 188) are rounded.

12. Device according to one of the preceding claims having a conveyor motor (118) for driving the conveyor means (28) and/or having a conveyor gear (32) for coupling to a drive (18) of a superordinate assembly (1), in particular a drift conveyor.

13. Drift conveyor having a first conveyor means (16) which circulates along a first conveyor track (2) and having a device (22), configured according to one of the preceding claims and arranged or able to be arranged in a fixed position on the first conveyor track (2), for lifting and moving the item from the first conveyor track (2) .

## Revendications

1. Dispositif de levage et de transport muni d'un corps de levage (30), sur lequel un moyen de transport en circulation (28) est dévié vers une voie de transport, sur laquelle un produit peut être transporté, et qui peut être articulé ou est articulé pour une levée (24) de la voie de transport par un entraînement linéaire (38, 72 ; 38, 172) du dispositif (22 ; 122 ; 222 ; 322 ; 422 ; 522), l'entraînement linéaire (38, 72 ; 38, 172) comprenant un moteur de rotation (38) et une transmission de moteur (72 ; 172) pour la conversion d'un angle de rotation en la levée (24), la transmission de moteur comprenant un disque à came (72 ; 172) relié au moteur de rotation de manière immobile en entraînement de rotation, par laquelle le corps de levage (30) peut être articulé ou est articulé indirectement ou directement, muni d'un corps de base (34) pouvant être agencé de manière fixe par rapport à un ensemble supérieur (1), notamment un transporteur, sur lequel le moteur de rotation (38) est agencé avec le disque à came (72 ; 172), **caractérisé en ce que** le corps de levage (30) est serré contre le disque à came (72 ; 172),
le corps de base étant une plaque de base (34),
le corps de levage (30) étant serré contre le disque à came (72 ; 172),
deux colonnes de guidage (58) étant reliées de manière fixe au corps de levage (30) sur le côté inférieur, qui s'étendent vers le bas à travers des supports d'arbre (60) et la plaque de base (34), ainsi qu'un profilé en tôle (48),
de telle sorte que le corps de levage (30) est guidé linéairement par l'intermédiaire des colonnes de guidage (58) et est mobile en levage par rapport à la plaque de base (34) et aux composants agencés sur celle-ci,
et des ressorts de pression étant enfilés sur les colonnes de guidage (58) et étant précontraints entre la plaque de base (34) et le profilé en tôle (48).

2. Dispositif selon la revendication 1, dans lequel le moteur de rotation est formé par un moteur électrique, notamment un moteur pas à pas (38).

3. Dispositif selon la revendication 1, dans lequel une surface de commande excentrique (86 ; 186) du disque à came (72 ; 172) présente une distance radiale (d) par rapport à l'axe de rotation du disque à came (72 ; 172) qui varie en fonction d'un angle circonférentiel (α) du disque à came (72 ; 172).

4. Dispositif selon l'une quelconque des revendications 1 et 3, dans lequel une surface de commande excentrique (86 ; 186) du disque à came (72 ; 172) peut glisser sur une section de corps de levage ou peut rouler sur un corps de roulement (74) relié de manière rotative au corps de levage (30).

5. Dispositif selon l'une quelconque des revendications 3 à 4, dans lequel la distance radiale (d) augmente lorsque l'angle circonférentiel (α) croît d'une valeur minimale (dₘᵢₙ) à une valeur maximale (dₘₐₓ), et/ou dans lequel la distance radiale (d) augmente lorsque l'angle circonférentiel (α) croît d'une valeur minimale (dₘᵢₙ) à une valeur maximale (dₘₐₓ), puis diminue à nouveau.

6. Dispositif selon l'une quelconque des revendications 3 à 5, dans lequel la surface de commande (86 ; 186) est divisée dans la direction circonférentielle en sections de levage qui, à une vitesse de rotation constante du disque à came (72 ; 172), provoquent des vitesses de levage différentes.

7. Dispositif selon l'une quelconque des revendications 3 à 6, dans lequel la surface de commande (86 ; 186) est divisée dans la direction circonférentielle en au moins une section d'encliquetage (88 ; 188), qui provoque un arrêt du corps de levage (30).

8. Dispositif au moins selon les revendications 5 et 7, dans lequel l'au moins une section d'encliquetage (88 ; 188) est agencée dans une plage angulaire circonférentielle de la valeur minimale (dₘᵢₙ) ou de la valeur maximale (dₘₐₓ) ou dans une plage angulaire circonférentielle entre la valeur minimale (dₘᵢₙ) et la valeur maximale (dₘₐₓ) .

9. Dispositif selon la revendication 7 ou 8, dans lequel l'au moins une section d'encliquetage (88 ; 188) présente un évidement ou abaissement concave, dans lequel la section de corps de levage ou le corps de roulement (74) peut être plongé au moins en sections.

10. Dispositif selon l'une quelconque des revendications 7 à 9, dans lequel l'au moins une section d'encliquetage (88 ; 188) peut être agencée en accouplement de forme avec la section de corps de levage ou une section du corps de roulement (74).

11. Dispositif selon l'une quelconque des revendications 7 à 10, dans lequel des bords (r) de l'au moins une section d'encliquetage (88 ; 188) agencés dans la direction circonférentielle sont arrondis.

12. Dispositif selon l'une quelconque des revendications précédentes, muni d'un moteur de transport (118) pour l'entraînement du moyen de transport (28), et/ou muni d'une transmission de transport (32) pour le couplage avec un entraînement (18) d'un ensemble supérieur (1), notamment d'un transporteur.

13. Transporteur muni d'un premier moyen de transport (16), qui circule le long d'une première voie de transport (2), et muni d'un dispositif (22) configuré selon l'une quelconque des revendications précédentes, pouvant être agencé ou étant agencé de manière fixe sur la première voie de transport (2), pour soulever et déplacer le produit de la première voie de transport (2) .
